# EUROPEAN PATENT APPLICATION

(11) **EP 3 413 382 A1**
(43) Date of publication of application: **12.12.2018**
(21) Application number: 17747337.8
(22) Date of filing: 30.01.2017
(51) Int. Cl.: H01M 8/04225, C01B 3/38, H01M 8/00, H01M 8/04302, H01M 8/04858, H01M 8/0612, H01M 8/10

(54) **FUEL CELL ASSEMBLY SYSTEM AND OPERATING METHOD THEREFOR**

(30) Priority: 03.02.2016 JP 2016018578
(71) Applicant: Panasonic Intellectual Property Management Co., Ltd., Osaka-shi, Osaka 540-6207 (JP)
(72) Inventor: INOUE Atsutaka, Osaka-shi Osaka 540-6207 (JP); TAMURA Yoshio, Osaka-shi Osaka 540-6207 (JP); OZEKI Masataka, Osaka-shi Osaka 540-6207 (JP)
(74) Representative: Grünecker Patent- und Rechtsanwälte PartG mbB
(86) International application number: PCT/JP2017/003093
(87) International publication number: WO 2017/135180

(57) **Abstract**

Fuel cell assembly system (100) interconnecting with system power supply (11) includes a plurality of fuel cell systems (1a, 1b) connected in parallel and controller (101) that controls the plurality of fuel cell systems (1a, 1b). The plurality of fuel cell systems (1a, 1b) include fuel cell system (1a) having a relatively smaller power generation output. Controller (101) starts fuel cell system (1a) having the relatively smaller power generation output at first when starting the plurality of fuel cell systems (1a, 1b). Controller (101) starts at least one of fuel cell systems (1b) except for fuel cell system (1a) having the relatively smaller power generation output using power of the fuel cell system (1a) having the relatively smaller power generation output.

## Description

### TECHNICAL FIELD

The present disclosure relates to a fuel cell assembly system to which a plurality of fuel cell systems are connected and an operating method therefor.

### BACKGROUND ART

A fuel cell is a device that generates power by an electrochemical reaction of a hydrogen-containing fuel gas and an oxygen-containing oxidant gas to simultaneously generate electricity and heat. The fuel cell directly extracts electrical energy without converting chemical energy owned by fuel into mechanical energy, so that the fuel cell having high power generation efficiency gathers attention.

A load that can be applied to the fuel cell widely ranges from a load corresponding to 1 kW for household use to a load of several hundred kilowatts for industry. For example, a fuel cell assembly system in which three 1-kW fuel cells are connected in parallel as a 3-kW class fuel cell system is considered.

For example, there is known a fuel cell assembly system including a plurality of fuel cells and a power storage device, a part of the plurality of fuel cells being started and another fuel cell being started using power of the precedingly-started fuel cell. There is also known a fuel cell assembly system, in which a part of the plurality of fuel cells is started using power of a power storage device and another fuel cell is started using the power of the precedingly-started fuel cell (for example, see PTL 1).

However, in the conventional configurations, the power generation outputs of the plurality of fuel cell systems are substantially equal to each other. For this reason, in the case that another fuel cell system is started using the power generated by the precedingly-started fuel cell system, the power generated by the precedingly-started fuel cell system is increased in an unnecessary manner, but starting power of the fuel cell system proportional to the power generation output can hardly be decreased.

In the configuration including the power storage device, although a starting process can be performed even if the power is not supplied from the system power supply, it is necessary to ensure the power storage device having a large capacity for the starting power of the fuel cell having the substantially equal power generation output.

For this reason, there are problems from the viewpoint of the starting power of the fuel cell assembly system to which the plurality of fuel cell systems are connected and the viewpoint of cost and miniaturization of the fuel cell assembly system.

### Citation List

### Patent Literature

PTL 1: Unexamined Japanese Patent Publication No. 2015-146258

### SUMMARY OF THE INVENTION

The present disclosure provides a fuel cell assembly system that can minimize the starting power and the starting time of the fuel cell assembly system to achieve cost reduction and miniaturization, and an operating method therefor.

One aspect of the present disclosure is a fuel cell assembly system interconnecting with a system power supply, the fuel cell assembly system including: a plurality of fuel cell systems that generate power using fuel while being connected in parallel; and a controller that controls the plurality of fuel cell systems. The plurality of fuel cell systems include a fuel cell system having a relatively smaller power generation output. The controller starts the fuel cell system having the relatively smaller power generation output at firs when starting the plurality of fuel cell systems. The controller starts at least one of the fuel cell systems except for the fuel cell system having the relatively smaller power generation output using power of the fuel cell system having the relatively smaller power generation output.

Another aspect of the present disclosure is a method for operating a fuel cell assembly system interconnecting with a system power supply, the fuel cell assembly system including a plurality of fuel cell systems that generate power using fuel while being connected in parallel. The plurality of fuel cell systems include a fuel cell system having a relatively smaller power generation output. The plurality of fuel cell systems are connected in parallel to each other. The fuel cell assembly system operating method includes a first step of starting the fuel cell system having the relatively smaller power generation output at first when starting the plurality of fuel cell systems. The fuel cell assembly system operating method includes a second step of starting at least one of the fuel cell systems except for the fuel cell system having the relatively smaller power generation output using power of the fuel cell system having the relatively smaller power generation output.

According to this configuration and method, the starting power and the starting time of the fuel cell assembly system can be minimized to achieve the cost reduction and the miniaturization.

According to the fuel cell assembly system of the present disclosure and the operating method therefor, in the fuel cell assembly system to which the plurality of fuel cell systems are connected, the starting power of the fuel cell system can be minimized by starting only the fuel cell system having the relatively smaller power generation output at first. The provision of the fuel cell system having the relatively smaller power generation output can start the fuel cell assembly system in a short time, and shorten a power supply time from the system power supply.

Necessity of power supply from the system power supply except for the starting power of the first fuel cell system is eliminated by starting at least one of the fuel cell systems except for the fuel cell system having the relatively smaller power generation output in the plurality of fuel cell systems using power of the precedingly-started fuel cell system. Therefore, a power supply amount from the system power supply can be minimized.

### BRIEF DESCRIPTION OF DRAWINGS

FIG. 1 is a block diagram schematically illustrating a configuration of a fuel cell assembly system according to a first exemplary embodiment of the present disclosure.
FIG. 2 is a block diagram schematically illustrating a configuration of a fuel cell assembly system according to a second exemplary embodiment of the present disclosure.
FIG. 3 is a block diagram schematically illustrating a configuration of a fuel cell assembly system according to a third exemplary embodiment of the present disclosure.
FIG. 4 is a block diagram schematically illustrating a configuration of a fuel cell assembly system according to a fourth exemplary embodiment of the present disclosure.

### DESCRIPTION OF EMBODIMENTS

A first aspect of the present disclosure is a fuel cell assembly system interconnecting with a system power supply, the fuel cell assembly system including: a plurality of fuel cell systems that generate power using fuel while being connected in parallel; and a controller that controls the plurality of fuel cell systems. The plurality of fuel cell systems include a fuel cell system having a relatively smaller power generation output. The controller starts the fuel cell system having the relatively smaller power generation output at first when starting the plurality of fuel cell systems. The controller starts at least one of the fuel cell systems except for the fuel cell system having the relatively smaller power generation output using power of the fuel cell system having the relatively smaller power generation output.

In this configuration, in the fuel cell assembly system to which the plurality of fuel cell systems are connected, the starting power of the fuel cell assembly system can be decreased by starting the fuel cell system having the relatively smaller power generation output at first. The provision of the fuel cell system having the smaller power generation output can start the fuel cell assembly system in a short time. Consequently, a power receiving time from the system power supply can be shortened.

The fuel cell system is started using the power of the precedingly-started fuel cell system, which allows suppression of a power receiving amount from the system power supply. Consequently, the fuel cell assembly system having the smaller starting power and shorter starting time can be made.

In a second aspect of the present disclosure, the plurality of fuel cell systems may be at least three in number in the first aspect. The controller may start a fuel cell system having a smallest power generation output at first in the plurality of fuel cell systems when starting the plurality of fuel cell systems.

In this configuration, in the fuel cell assembly system to which the plurality of fuel cell systems are connected, the starting power and the starting time of the fuel cell assembly system can be minimized by starting only the fuel cell system having the smallest power generation output at first. Consequently, the fuel cell assembly system having the smaller starting power and short starting time can be provided.

A third aspect of the present disclosure may be configured such that the controller preferentially starts the plurality of fuel cell systems one by one in order of increasing a power generation output in the first or second aspect.

The controller may starts each of the fuel cell systems using power of a fuel cell system started prior to the each of the fuel cell systems, the each of the fuel cell systems being except a fuel cell system started at first in the plurality of fuel cell systems.

In this configuration, the power generation output is small, the fuel cell systems can be started in ascending order of the starting time, and the starting time can be shortened as the fuel cell assembly system. Consequently, the fuel cell assembly system having the shorter starting time can be provided.

A fourth aspect of the present disclosure may further include a power storage device in any one of the first to third aspects. The controller may start the fuel cell system having the relatively smaller power generation output at first, using power of the power storage device when starting the plurality of fuel cell systems during interruption to the system power supply.

In this configuration, the fuel cell systems is started using the power of the power storage device, so that the fuel cell assembly system can be started during interruption of the system power supply. The fuel cell system started earlier has the relatively smaller power generation output, so that the power amount necessary for the starting completion is decreased. For this reason, the power amount of the power storage device can be minimized. Consequently, the cost reduction and the miniaturization of the fuel cell assembly system can be achieved.

A fifth aspect of the present disclosure, each of the plurality of fuel cell systems may include a hydrogen generator. The hydrogen generator may include a reformer and a combustor. The hydrogen generator may reform a raw material to generate the fuel. The combustor may heat the reformer by burning at least one of the raw material and the fuel in any one of the first to fourth aspects.

Generally the starting time of a hydrogen generation device of the fuel cell system in which the fuel cell has the relatively smaller power generation output is shorter than that of a hydrogen generation device of the fuel cell system in which the fuel cell has the relatively larger power generation output. Thus, when the fuel cell systems can be started in ascending order of the power generation output, the starting time can further be shortened as the fuel cell assembly system. Consequently, in the fuel cell assembly system including the hydrogen generator, the fuel cell assembly system having the smaller starting power and short starting time can be provided.

A sixth aspect of the present disclosure is a method for operating a fuel cell assembly system interconnecting with a system power supply, the fuel cell assembly system including a plurality of fuel cell systems that generate power using fuel while being connected in parallel to each other. The plurality of fuel cell systems include a fuel cell system having a relatively smaller power generation output. The fuel cell assembly system operating method includes a first step of starting the fuel cell system having the relatively smaller power generation output at first when starting the plurality of fuel cell systems. The fuel cell assembly system operating method includes a second step of starting at least one of the fuel cell systems except for the fuel cell system having the relatively smaller power generation output using power of the fuel cell system having the relatively smaller power generation output.

In this method, only the fuel cell system having the relatively smaller power generation output is started at first in the fuel cell assembly system to which the plurality of fuel cell systems are connected. Consequently, the starting power of the fuel cell assembly system can be decreased. The provision of the fuel cell system having the smaller power generation output can start the fuel cell assembly system in a short time. Consequently, a power receiving time from the system power supply can be shortened.

Additionally, the fuel cell system is started using the power of the precedingly-started fuel cell system, which allows suppression of a power receiving amount from the system power supply. Consequently, the starting power of the fuel cell assembly system can be decreased, and the starting time of the fuel cell assembly system can be shortened.

In a seventh aspect of the present disclosure, the plurality of fuel cell systems may be at least three in number. In the first step, a fuel cell system having a smallest power generation output in the plurality of fuel cell systems may be started at first when the plurality of fuel cell systems are started in the sixth aspect.

Only the fuel cell system having the smallest power generation output is started at first in the fuel cell assembly system to which the plurality of fuel cell systems are connected. This enables the starting power and the starting time of the fuel cell assembly system to be minimized. Consequently, the starting power of the fuel cell assembly system can be decreased, and the starting time of the fuel cell assembly system can be shortened.

In an eighth aspect of the present disclosure, the controller may preferentially start the plurality of fuel cell systems one by one in order of increasing a power generation output in the first step in the sixth or seventh aspect.

Generally the starting time of the fuel cell system tends to be short as the fuel cell system has the smaller power generation output. When the plurality of fuel cell systems are started, the fuel cell system having the small power generation output is preferentially started one by one in ascending order of the power generation output, the starting time largely depending on the power generation output of the fuel cell in the fuel cell system. Consequently, the fuel cell systems can be started in ascending order of the starting time, and the starting time can be shortened as the fuel cell assembly system.

In a ninth aspect of the present disclosure, the fuel cell assembly system may further include a power storage device in any one of the sixth to eighth aspects. In the first step, the fuel cell system having the relatively smaller power generation output may be started, the fuel cell system being started at first, using power of the power storage device when the plurality of fuel cell systems are started during interruption to the system power supply.

This enables the fuel cell system to be started using the power of the power storage device. Thus, the fuel cell assembly system can be started even in the interruption of the system power supply. The power amount necessary for the starting completion is decreased because the fuel cell system that is started earlier has the relatively smaller power generation output, so that the power amount necessary for the starting of the power storage device can be minimized. Consequently, the cost reduction and the miniaturization of the fuel cell assembly system can be achieved.

In a tenth aspect of the present disclosure, each of the plurality of fuel cell systems may include a hydrogen generator. The hydrogen generator may include a reformer and a combustor. The hydrogen generator may reform a raw material to generate the fuel. The combustor may heat the reformer by burning at least one of the raw material and the fuel in any one of the sixth to ninth aspects.

Generally the starting time of a hydrogen generation device of the fuel cell system in which the fuel cell has the relatively smaller power generation output is shorter than that of a hydrogen generation device of the fuel cell system in which the fuel cell has the relatively larger power generation output. Thus, when the fuel cell systems can be started in ascending order of the power generation output, the starting time can further be shortened as the fuel cell assembly system.

Hereinafter, exemplary embodiments of the present disclosure will specifically be illustrated. In all the drawings, the identical or equivalent portion is designated by the identical numeral, and the overlapping description will be omitted. In all the drawings, only a constituent necessary for the description of the present disclosure is extracted and illustrated, and illustration of other constituents is omitted. The present disclosure is not limited to the following exemplary embodiments.

### (First exemplary embodiment)

### [Configuration of fuel cell assembly system]

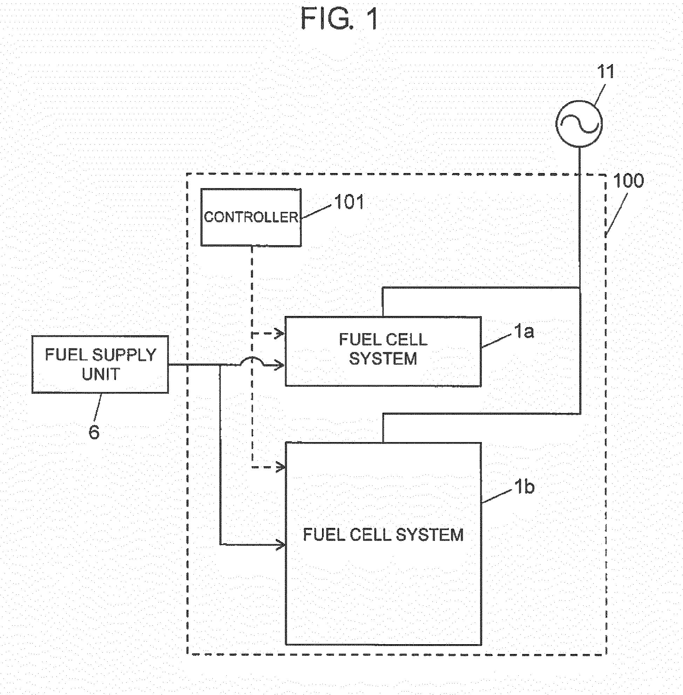

FIG. 1 is a block diagram schematically illustrating a configuration of a fuel cell assembly system according to a first exemplary embodiment of the present disclosure.

As illustrated in FIG. 1, fuel cell assembly system 100 of the first exemplary embodiment of the present disclosure includes fuel cell system 1a, fuel cell system 1b, and controller 101.

A polymer electrolyte fuel cell is used as a fuel cell (not illustrated) of each of fuel cell system 1a and fuel cell system 1b. A configuration of each of fuel cell system 1a and fuel cell system 1b is similar to that of a typical fuel cell system, so that the detailed description will be omitted. Fuel (in the first exemplary embodiment, hydrogen) is supplied to fuel cell system 1a and fuel cell system 1b through fuel supply unit 6.

In fuel cell assembly system 100, fuel cell system 1a and fuel cell system 1b that interconnect with system power supply 11 to generate power using fuel and an oxygen-containing gas are connected in parallel. In fuel cell assembly system 100, a power regulator (not illustrated) receives the power of system power supply 11 during starting of fuel cell assembly system 100, and supplies the power to system power supply 11 during the power generation.

In the first exemplary embodiment, a rated power generation output of fuel cell assembly system 100 is set to 3 kW, a rated power generation output of fuel cell system 1a is set to 0.5 kW, and a rated power generation output of fuel cell system 1b is set to 2.5 kW. The maximum power necessary for the starting of fuel cell system 1a is 0.1 kW, and the maximum power necessary for the starting of fuel cell system 1b is 0.5 kW.

The rated power generation output of fuel cell system 1a is set to at least the maximum power necessary for the starting of fuel cell system 1b. The rated power generation output of fuel cell system 1a is set identical to the maximum power necessary for the starting of fuel cell system 1b, which allows the power of fuel cell system 1a to be used during the starting of fuel cell system 1b.

Controller 101 includes an arithmetic processor exemplified by a microprocessor or a Central Processing Unit (CPU) and a storage constructed with a memory in which a program executing each control operation is stored. In controller 101, the arithmetic processor reads a predetermined control program stored in the storage, and executes the control program. Consequently, controller 101 processes information to perform various kinds of control including the control program and relating to fuel cell assembly system 100.

### [Operation of fuel cell assembly system]

A starting operation of fuel cell assembly system 100 of the first exemplary embodiment will be described below with reference to FIG. 1. A power generation operation of fuel cell assembly system 100 is performed similarly to a power generation operation of a typical fuel cell assembly system, so that the detailed description will be omitted.

When operation of fuel cell assembly system 100 is started, controller 101 starts fuel cell system 1a having the relatively smaller power generation output in fuel cell systems 1a, 1b using the power of system power supply 11. The maximum power necessary for the starting of fuel cell system 1a is 0.1 kW.

After the starting completion, fuel cell system 1a starts rated power generation of 0.5 kW.

When fuel cell system 1a starts the rated power generation, controller 101 causes fuel cell system 1b to start starting operation. The maximum power necessary for the starting of fuel cell system 1b is 0.5 kW. Fuel cell system 1b is started using the rated power of 0.5 kW of fuel cell system 1a that substantially starts the power generation earlier.

After the starting completion, fuel cell system 1b starts the rated power generation of 2.5 kW, and controller 101 controls the operation of fuel cell assembly system 100 according to a load.

In this way, in fuel cell assembly system 100 of the first exemplary embodiment to which the plurality of fuel cell systems 1a, 1b are connected, at first only fuel cell system 1a having the relatively smaller power generation output is started using the power of system power supply 11. Then, fuel cell system 1b is started using the power of precedingly-started fuel cell system 1a. Consequently, the power necessary for the starting of fuel cell assembly system 100 is only the starting power of fuel cell system 1a, and the starting power can be decreased.

The provision of fuel cell system 1a having the power generation output smaller than that of fuel cell system 1b can start fuel cell system 1a in a short time. Consequently, a power receiving time from system power supply 11 can be shortened.

Fuel cell system 1b is started using the power of precedingly-started fuel cell system 1a, which allows suppression of a power receiving amount from system power supply 11. Therefore, fuel cell assembly system 100 having the small starting power and short starting time can be provided.

In the first exemplary embodiment, by way of example, the rated power generation outputs of fuel cell system 1a and fuel cell system 1b are set to 0.5 kW and 2.5 kW, respectively. However, the present disclosure is not limited to the first exemplary embodiment, but any rated power generation output may be used as long as the rated power generation output of fuel cell system 1a is set to the minimum rated power generation output capable of starting fuel cell system 1b.

### (Second exemplary embodiment)

### [Configuration of fuel cell assembly system]

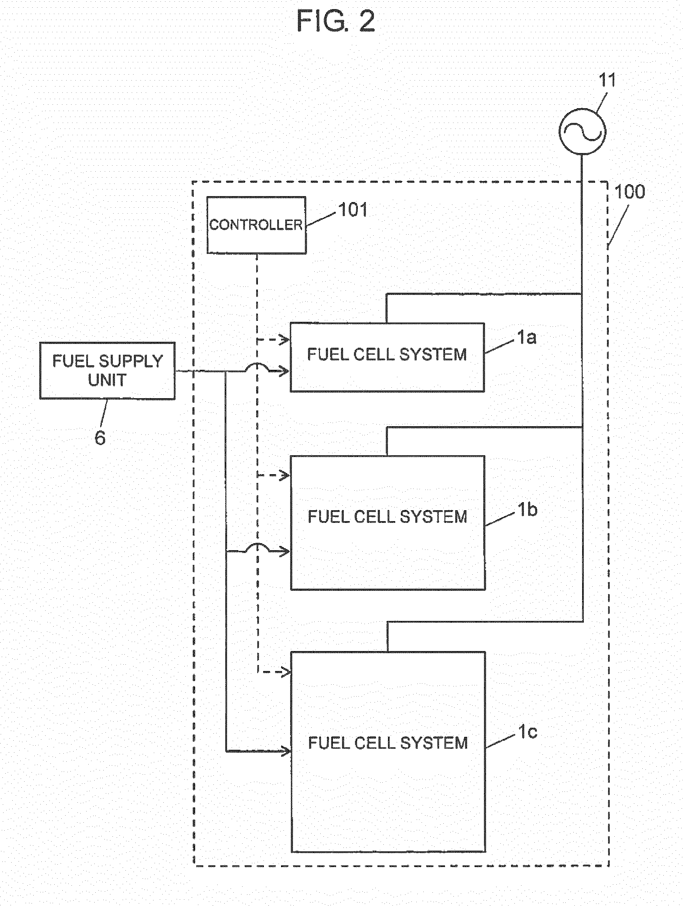

FIG. 2 is a block diagram schematically illustrating a configuration of a fuel cell assembly system 100 according to a second exemplary embodiment of the present disclosure.

As illustrated in FIG. 2, fuel cell assembly system 100 of the second exemplary embodiment of the present disclosure includes fuel cell system 1a, fuel cell system 1b, fuel cell system 1c, and controller 101.

A polymer electrolyte fuel cell is used as a fuel cell (not illustrated) of each of fuel cell system 1a, fuel cell system 1b, and fuel cell system 1c. A configuration of each of fuel cell system 1a, fuel cell system 1b, and fuel cell system 1c is similar to that of a typical fuel cell system, so that the detailed description will be omitted.

The fuel (in the second exemplary embodiment, hydrogen) is supplied to fuel cell system 1a, fuel cell system 1b, and fuel cell system 1c through fuel supply unit 6.

In fuel cell assembly system 100, fuel cell system 1a, fuel cell system 1b, and fuel cell system 1c that interconnect with system power supply 11 to generate the power using the fuel and the oxygen-containing gas are connected in parallel. In fuel cell assembly system 100, the power regulator (not illustrated) receives the power of system power supply 11 during the starting of fuel cell assembly system 100, and supplies the power to system power supply 11 during the power generation.

In fuel cell assembly system 100 of the second exemplary embodiment, the rated power generation output of fuel cell assembly system 100 is set to 16 kW, the rated power generation output of fuel cell system 1a is set to 1 kW, the rated power generation output of fuel cell system 1b is set to 5 kW, and the rated power generation output of fuel cell system 1c is set to 10 kW.

The maximum power necessary for the starting of fuel cell system 1a is 0.2 kW, the maximum power necessary for the starting of fuel cell system 1b is 1 kW, and the maximum power necessary for the starting of fuel cell system 1c is 2 kW.

The rated power generation output of fuel cell system 1a is set identical to the maximum power necessary for the starting of fuel cell system 1b. A total of the rated power generation outputs of fuel cell system 1a and fuel cell system 1b is set larger than the maximum power necessary for the starting of fuel cell system 1c.

In the second exemplary embodiment, the rated power generation output of fuel cell system 1a is set identical to the maximum power necessary for the starting of fuel cell system 1b. The total of the rated power generation outputs of fuel cell system 1a and fuel cell system 1b is set larger than the maximum power necessary for the starting of fuel cell system 1c. Consequently, the power of fuel cell system 1a can be used for the starting of fuel cell system 1b, and the power of fuel cell system 1a and fuel cell system 1b can be used for the starting of fuel cell system 1c.

### [Operation of fuel cell assembly system]

The starting operation of fuel cell assembly system 100 of the second exemplary embodiment will be described below with reference to FIG. 2. The power generation operation of fuel cell assembly system 100 is performed similarly to a power generation operation of a typical fuel cell assembly system, so that the detailed description will be omitted.

When the operation of fuel cell assembly system 100 is started, controller 101 starts fuel cell system 1a having the smallest power generation output in fuel cell systems 1a, 1b, 1c using the power of system power supply 11. The maximum power necessary for starting of fuel cell system 1a is 0.2 kW.

After the starting completion, fuel cell system 1a starts the rated power generation of 1 kW.

When the rated power generation of fuel cell system 1a is started, controller 101 starts starting operation of fuel cell system 1b having the second smallest power generation output in fuel cell systems 1a, 1b, 1c. The maximum power necessary for the starting of fuel cell system 1b is 1 kW, and fuel cell system 1b is started using the rated power of 1 kW of fuel cell system 1a that substantially starts the power generation earlier.

After the starting completion of fuel cell system 1b, fuel cell system 1b starts the rated power generation.

When the rated power generation of 5 kW of fuel cell system 1b is started, controller 101 starts the starting operation of fuel cell system 1c having the third smallest power generation output in fuel cell systems 1a, 1b, 1c. The maximum power necessary for the starting of fuel cell system 1c is 2 kW, and fuel cell system 1c is started using the rated power of the total of 6 kW of fuel cell system 1a and fuel cell system 1b that substantially start the power generation earlier.

After the starting completion of fuel cell system 1c, fuel cell system 1c starts the rated power generation of 10 kW, and controller 101 controls the operation of fuel cell assembly system 100 according to the load.

In this way, in fuel cell assembly system 100 of the second exemplary embodiment to which the plurality of fuel cell systems 1a, 1b, 1c are connected, at first only fuel cell system 1a having the smallest power generation output is started using the power of system power supply 11. Then, fuel cell system 1b having the second smallest power generation output is started using the power of precedingly-started fuel cell system 1a. Then, fuel cell system 1c having the third smallest power generation output is started using the power of fuel cell system 1a started earlier and fuel cell system 1b started in the second.

Consequently, the power necessary for the starting of fuel cell assembly system 100 from system power supply 11 is only the starting power of fuel cell system 1a, and the starting power can be minimized.

The power generation output is small, fuel cell system 1a, 1b, 1c can be started in ascending order of the starting time, and the starting time can be shortened as fuel cell assembly system 100. Therefore, fuel cell assembly system 100 having the smaller starting power and shorter starting time can be made.

In the second exemplary embodiment, by way of example, the rated power generation outputs of fuel cell system 1a, fuel cell system 1b, and fuel cell system 1c are set to 1 kW, 5 kW, and 10 kW, respectively. However, the present disclosure is not limited to the second exemplary embodiment. Any rated power generation output may be used as long as the total of the rated power generation outputs of fuel cell systems started in order is set to the minimum rated power generation output capable of starting next fuel cell system.

### (Third exemplary embodiment)

### [Configuration of fuel cell assembly system]

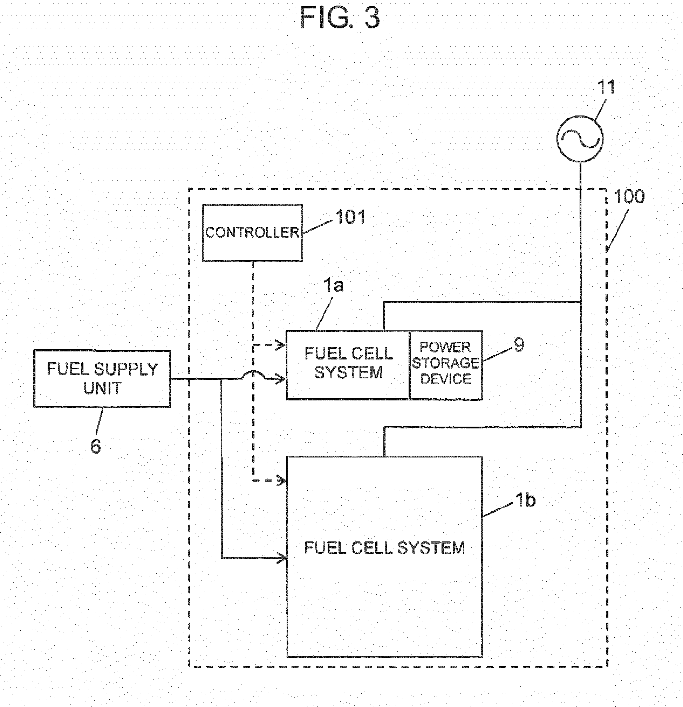

FIG. 3 is a block diagram schematically illustrating a configuration of a fuel cell assembly system 100 according to a third exemplary embodiment of the present disclosure.

Fuel cell assembly system 100 of the third exemplary embodiment of the present disclosure is identical to fuel cell assembly system 100 of the first exemplary embodiment in a basic configuration, but fuel cell assembly system 100 of the third exemplary embodiment is different from fuel cell assembly system 100 of the first exemplary embodiment in that power storage device 9 is provided in fuel cell system 1a.

In fuel cell assembly system 100, fuel cell system 1a and fuel cell system 1b that interconnect with system power supply 11 to generate the power using the fuel and the oxygen-containing gas are connected in parallel. In fuel cell assembly system 100, the power regulator (not illustrated) receives the power of power storage device 9 and system power supply 11 during the starting of fuel cell assembly system 100, and supplies the power to power storage device 9 and system power supply 11 during the power generation.

In the third exemplary embodiment, the rated power generation output of fuel cell assembly system 100 is set to 3 kW, the rated power generation output of fuel cell system 1a is set to 0.5 kW, the rated power generation output of fuel cell system 1b is set to 2.5 kW, and a power storage amount of power storage device 9 is set to 0.1 kWh.

The maximum power necessary for the starting of fuel cell system 1a is 0.1 kW, the maximum power necessary for the starting of fuel cell system 1b is 0.5 kW, and maximum power amounts necessary for the starting completion of fuel cell systems 1a, 1b are 0.05 kWh and 0.25 kWh, respectively.

The rated power generation output of fuel cell system 1a is set to at least the maximum power necessary for the starting of fuel cell system 1b. The rated power generation output of fuel cell system 1a is set identical to the maximum power necessary for the starting of fuel cell system 1b, which allows the power of fuel cell system 1a to be used during the starting of fuel cell system 1b.

As illustrated in FIG. 3, fuel cell assembly system 100 of the third exemplary embodiment of the present disclosure includes fuel cell system 1a, fuel cell system 1b, fuel supply unit 6, power storage device 9, and controller 101.

Power storage device 9 of the third exemplary embodiment of the present disclosure has the power amount necessary for the starting of fuel cell system 1a, and power storage device 9 is constructed with a secondary battery.

### [Operation of fuel cell assembly system]

The starting operation of fuel cell assembly system 100 of the third exemplary embodiment will be described below with reference to FIG. 3. The power generation operation of fuel cell assembly system 100 is performed similarly to a power generation operation of a typical fuel cell assembly system, so that the detailed description will be omitted.

When the operation of fuel cell assembly system 100 is started, controller 101 starts fuel cell system 1a having the relatively smaller power generation output in fuel cell systems 1a, 1b using the power from power storage device 9. The power amount necessary for the starting completion of fuel cell system 1a is 0.05 kWh, so that a process of starting fuel cell system 1a can be completed using the power storage amount of 0.1 kWh of power storage device 9.

After the starting completion of fuel cell system 1a, fuel cell system 1a starts the rated power generation of 0.5 kW.

When fuel cell system 1a starts the rated power generation, controller 101 causes fuel cell system 1b to start the starting operation. The maximum power necessary for the starting of fuel cell system 1b is 0.5 kW, and fuel cell system 1b is started using the rated power of 0.5 kW of fuel cell system 1a that substantially starts the power generation earlier.

After the starting completion of fuel cell system 1b, fuel cell system 1b starts the rated power generation of 2.5 kW, and controller 101 controls the operation of fuel cell assembly system 100 according to the load.

In this way, in fuel cell assembly system 100 of the third exemplary embodiment to which the plurality of fuel cell systems 1a, 1b are connected, at first only fuel cell system 1a having the relatively smaller power generation output is started using the power from power storage device 9. Then, fuel cell system 1b is started using the power of precedingly-started fuel cell system 1a, which allows fuel cell assembly system 100 to be started even in interruption of power supply.

Fuel cell system 1a having the relatively smaller power generation output also has the small power amount necessary for the starting completion. For this reason, the power storage amount of power storage device 9 can be decreased. Therefore, fuel cell assembly system 100 having the small starting power can be provided, and cost reduction and miniaturization of fuel cell assembly system 100 can be achieved.

That is, the configuration including power storage device 9 can start fuel cell system 1a at the minimum power storage amount, so that the cost reduction and miniaturization of fuel cell assembly system 100 can be achieved.

In the third exemplary embodiment, by way of example, the rated power generation outputs of fuel cell system 1a and fuel cell system 1b are set to 0.5 kW and 2.5 kW, respectively, and the storage power of power storage device 9 is set to 0.1 kWh. However, the present disclosure is not limited to the third exemplary embodiment. Any rated power generation output may be used as long as fuel cell system 1a can be started by the storage power of power storage device 9 and as long as the power generation output of fuel cell system 1a is set to the power generation output capable of starting fuel cell system 1b.

In the third exemplary embodiment, by way of example, power storage device 9 is connected to the outside of fuel cell system 1a. However, the present disclosure is not limited to the third exemplary embodiment. Power storage device 9 may be provided in fuel cell system 1a as long as power storage device 9 can be used for the starting power of fuel cell system 1a.

### (Fourth exemplary embodiment)

### [Configuration of fuel cell assembly system]

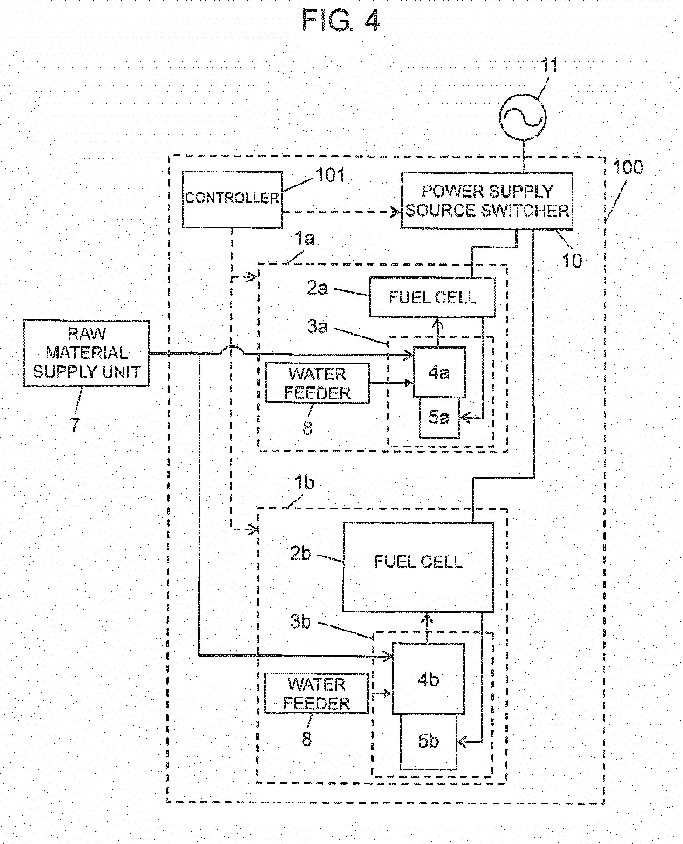

FIG. 4 is a block diagram schematically illustrating a configuration of a fuel cell assembly system 100 according to a fourth exemplary embodiment of the present disclosure.

Fuel cell assembly system 100 of the fourth exemplary embodiment of the present disclosure is identical to fuel cell assembly system 100 of the first exemplary embodiment in the basic configuration. However, fuel cell assembly system 100 of the fourth exemplary embodiment is different from fuel cell assembly system 100 of the first exemplary embodiment in that hydrogen generators 3a, 3b are provided in fuel cell system 1a, 1b, respectively and that fuel cell assembly system 100 includes power supply source switcher 10.

In fuel cell assembly system 100, fuel cell system 1a and fuel cell system 1b that interconnect with system power supply 11 to generate the power using the fuel and the oxygen-containing gas are connected in parallel with power supply source switcher 10 interposed therebetween. In fuel cell assembly system 100, the power regulator (not illustrated) receives the power of system power supply 11 during the starting of fuel cell assembly system 100, and supplies the power to system power supply 11 during the power generation.

In the fourth exemplary embodiment, the rated power generation output of fuel cell assembly system 100 is set to 5 kW, the rated power generation output of fuel cell system 1a is set to 2 kW, and the rated power generation output of fuel cell system 1b is set to 3 kW.

The maximum power necessary for the starting of fuel cell system 1a is 1.4 kW, and the maximum power necessary for the starting of fuel cell system 1b is 2 kW.

The rated power generation output of fuel cell system 1a is set identical to the maximum power necessary for the starting of fuel cell system 1b. The rated power generation output of fuel cell system 1a is set identical to the maximum power necessary for the starting of fuel cell system 1b, which allows the power of fuel cell system 1a to be used during the starting of fuel cell system 1b.

As illustrated in FIG. 4, fuel cell assembly system 100 of the fourth exemplary embodiment of the present disclosure includes fuel cell system 1a, fuel cell system 1b, fuel cell 2a, fuel cell 2b, hydrogen generator 3a, hydrogen generator 3b, power supply source switcher 10, and controller 101.

As illustrated in FIG. 4, fuel cell system 1a and fuel cell system 1b include hydrogen generator 3a and hydrogen generator 3b, respectively. Hydrogen generator 3a and hydrogen generator 3b have fuel supply capabilities necessary for the power generation of fuel cell 2a and fuel cell 2b, respectively. A raw material (in the fourth exemplary embodiment, city gas) is supplied to hydrogen generator 3a and hydrogen generator 3b through raw material supply unit 7.

Hydrogen generators 3a, 3b include reformers 4a, 4b and combustors 5a, 5b that heat reformers 4a, 4b, respectively.

Reformers 4a, 4b perform reforming reaction of the raw material gas and water to generate a hydrogen-containing gas that is fuel containing hydrogen. The hydrogen-containing gases generated by reformers 4a, 4b are supplied to anodes of fuel cells 2a, 2b.

Raw material supply unit 7 and water feeder 8 are connected to reformers 4a, 4b of hydrogen generators 3a, 3b. Raw material supply unit 7 supplies the raw material gas that is a gaseous raw material to reformers 4a, 4b while regulating a flow rate of the raw material gas. For example, raw material supply unit 7 can be constructed with a flow regulating valve and a pump (not illustrated).

Off hydrogen-containing gas passages that communicate fuel cells 2a, 2b and combustors 5a, 5b are connected to combustors 5a, 5b. Combustors 5a, 5b burn the off hydrogen-containing gas that is the fuel gas discharged from fuel cells 2a, 2b through the off hydrogen-containing gas passage to generate an off combustion gas.

Combustors 5a, 5b may heat reformers 4a, 4b by burning at least one of the raw material gas and the fuel gas.

After heating reformers 4a, 4b, the off combustion gas generated by combustors 5a, 5b of hydrogen generators 3a, 3b is discharged to an off combustion gas passage, and discharged to the outside of fuel cell assembly system 100 (not illustrated).

Water feeder 8 supplies water necessary for a steam reforming reaction to reformers 4a, 4b. Water feeder 8 supplies the water to reformers 4a, 4b while regulating a flow rate of the water.

### [Operation of fuel cell assembly system]

The starting operation of fuel cell assembly system 100 of the fourth exemplary embodiment will be described below with reference to FIG. 4. The power generation operation of fuel cell assembly system 100 is performed similarly to a power generation operation of a typical fuel cell assembly system, so that the detailed description will be omitted.

When the operation of fuel cell assembly system 100 is started, controller 101 controls power supply source switcher 10 such that the power is supplied from system power supply 11 to fuel cell system 1a, and controller 101 starts fuel cell system 1a having the relatively smaller power generation output in fuel cell systems 1a, 1b using the power of system power supply 11. The maximum power necessary for the starting of fuel cell system 1a is 1.4 kW.

After the starting completion of fuel cell system 1a, fuel cell system 1a starts the rated power generation of 2 kW.

When fuel cell system 1a starts the rated power generation, power supply source switcher 10 is controlled such that the power from the system power supply 11 is separated using a signal from controller 101, and such that the power is supplied from fuel cell system 1a to fuel cell system 1b. The starting operation of fuel cell system 1b is started using the rated power of 2 kW of fuel cell system 1a.

The maximum power necessary for the starting of fuel cell system 1b is 2 kW, and fuel cell system 1b is started using the rated power of 2 kW of fuel cell system 1a that substantially starts the power generation earlier.

After the starting completion of fuel cell system 1b, fuel cell system 1b starts the rated power generation of 3 kW, and power supply source switcher 10 is controlled such that the power is supplied from fuel cell assembly system 100 to system power supply 11. Controller 101 controls the operation of fuel cell assembly system 100 according to the load.

In fuel cell assembly system 100 of the fourth exemplary embodiment, the effect similar to that of fuel cell assembly system 100 of the first exemplary embodiment is obtained. In the fuel cell system including hydrogen generators 3a, 3b, the starting time largely depending on the power generation output of the fuel cell in the fuel cell system, the starting time is short, the starting can be performed in order from fuel cell system 1a having the smaller power generation output, and the starting time can be shortened as fuel cell assembly system 100.

The provision of power supply source switcher 10 can start fuel cell system 1b using only the power generated by fuel cell system 1a that starts the power generation earlier.

For this reason, in fuel cell assembly system 100 including hydrogen generators 3a, 3b, fuel cell assembly system 100 having the smaller starting power and short starting time can be provided.

In each of the above exemplary embodiments, by way of example, the fuel cell of each of fuel cell system 1a, fuel cell system 1b, and fuel cell system 1c is the polymer electrolyte fuel cell. However, the present disclosure is not limited to the polymer electrolyte fuel cell. Various fuel cells such as a direct internal reforming type solid oxide fuel cell and an indirect internal reforming type solid oxide fuel cell can be used.

In each of the above exemplary embodiments, by way of example, the plurality of fuel cell systems are connected to fuel cell assembly system 100. However, the present disclosure is not limited to fuel cell assembly system 100 to which the plurality of fuel cell systems are connected. For example, a plurality of fuel cells may be connected to fuel cell assembly system 100.

In fuel cell assembly system 100 of each of the above exemplary embodiments, by way of example, the power is supplied to system power supply 11 after the starting completion of all the plurality of fuel cell systems. However, the present disclosure is not limited to fuel cell assembly system 100 in which the power is supplied to system power supply 11 after the starting completion of all the plurality of fuel cell systems. For example, the power may be supplied to system power supply 11 when the starting completion of at least one of the plurality of fuel cell systems.

Any device that controls each device constituting fuel cell assembly system 100 may be used as controller 101. Not only controller 101 is constructed with as single controller, but also controller 101 may be constructed with a controller group in which a plurality of controllers collaborate to perform the control of fuel cell assembly system 100. Controller 101 may be constructed with a microcomputer, or a (MicroProcessor Unit (MPU), a Programmable Logic Controller (PLC), a logic circuit, or the like.

Power storage device 9 of the third exemplary embodiment of the present disclosure is the secondary battery by way of example. However, the present disclosure is not limited to the secondary battery. For example, power storage device 9 may be constructed with at least one of a vehicular battery and a dry battery.

It is clear from the above description that those skilled in the art can make modifications and other embodiments of the present disclosure. Accordingly, the above description should be interpreted as only illustration, and is intended to teach the best mode carrying out the present disclosure to those skilled in the art. The details of at least one of the structure and the function can substantially be changed without departing from the scope of the present disclosure. Various inventions relating to the present disclosure can be made by a proper combination of the plurality of constituents disclosed in each of the above exemplary embodiments.

### INDUSTRIAL APPLICABILITY

As described above, in the fuel cell assembly system of the present disclosure to which the plurality of fuel cell systems are connected, the starting power and the starting time of the fuel cell assembly system can be minimized by starting only the fuel cell system having the relatively smaller power generation output at first.

The fuel cell assembly system having the small starting power and short starting time can be provided, so that the fuel cell assembly system is suitably used to perform the starting particularly during interruption of the system power supply.

### REFERENCE MARKS IN THE DRAWINGS

- 1a: fuel cell system
- 1b: fuel cell system
- 1c: fuel cell system
- 2a: fuel cell
- 2b: fuel cell
- 3a: hydrogen generator
- 3b: hydrogen generator
- 4a: reformer
- 4b: reformer
- 5a: combustor
- 5b: combustor
- 6: fuel supply unit
- 7: raw material supply unit
- 8: water feeder
- 9: power storage device
- 10: power supply source switcher
- 11: system power supply
- 100: fuel cell assembly system
- 101: controller

## Claims

1. A fuel cell assembly system interconnecting with a system power supply, the fuel cell assembly system comprising: a plurality of fuel cell systems that generate power using fuel while being connected in parallel; and a controller that controls the plurality of fuel cell systems,
wherein the plurality of fuel cell systems include a fuel cell system having a relatively smaller power generation output,
the controller starts the fuel cell system having the relatively smaller power generation output at first when starting the plurality of fuel cell systems, and
the controller starts at least one of the fuel cell systems except for the fuel cell system having the relatively smaller power generation output, using power of the fuel cell system having the relatively smaller power generation output.

2. The fuel cell assembly system according to claim 1, wherein the plurality of fuel cell systems are at least three in number, and
the controller starts a fuel cell system having a smallest power generation output in the plurality of fuel cell systems at first when starting the plurality of fuel cell systems.

3. The fuel cell assembly system according to claim 2, wherein the controller starts the plurality of fuel cell systems one by one in order of increasing a power generation output, and
the controller starts each of the fuel cell systems using power of a fuel cell system started prior to the each of the fuel cell systems, the each of the fuel cell systems being except a fuel cell system started at first in the plurality of fuel cell systems.

4. The fuel cell assembly system according to any one of claims 1 to 3, further comprising a power storage device,
wherein the controller starts the fuel cell system having the relatively smaller power generation output, the fuel cell system being started at first, using power of the power storage device when starting the plurality of fuel cell systems during interruption to the system power supply.

5. The fuel cell assembly system according to any one of claims 1 to 4, wherein each of the plurality of fuel cell systems includes a hydrogen generator, the hydrogen generator including a reformer and a combustor, the hydrogen generator reforming a raw material to generate the fuel, the combustor heating the reformer by burning at least one of the raw material and the fuel.

6. A method for operating a fuel cell assembly system interconnecting with a system power supply, the fuel cell assembly system including a plurality of fuel cell systems that generate power using fuel, the plurality of fuel cell systems including a fuel cell system having a relatively smaller power generation output, the plurality of fuel cell systems being in connected in parallel to each other,
the fuel cell assembly system operating method comprising:
a first step of starting the fuel cell system having the relatively smaller power generation output at first when starting the plurality of fuel cell systems; and
a second step of starting at least one of the fuel cell systems except for the fuel cell system having the relatively smaller power generation output using power of the fuel cell system having the relatively smaller power generation output.

7. The fuel cell assembly system operating method according to claim 6, wherein
the plurality of fuel cell systems are at least three in number, and
in the first step, a fuel cell system having a smallest power generation output in the plurality of fuel cell systems is started at first when the plurality of fuel cell systems are started.

8. The fuel cell assembly system operating method according to claim 7, wherein in the first step, the plurality of fuel cell systems are started one by one in order of increasing a power generation output.

9. The fuel cell assembly system operating method according to any one of claims 6 to 8, wherein
the fuel cell assembly system includes a power storage device, and
in the first step, the fuel cell system having the relatively smaller power generation output is started, the fuel cell system being started at first, using power of the power storage device when the plurality of fuel cell systems are started during interruption to the system power supply.

10. The fuel cell assembly system operating method according to any one of claims 6 to 9, wherein each of the plurality of fuel cell systems includes a hydrogen generator, hydrogen generator including a reformer and a combustor, the hydrogen generator reforming a raw material to generate the fuel, the combustor heating the reformer by burning at least one of the raw material and the fuel.
